# EUROPÄISCHE PATENTSCHRIFT

(11) **EP 2 508 397 B1**
(45) Veröffentlichungstag und Bekanntmachung des Hinweises auf die Patenterteilung: **30.03.2016**
(21) Anmeldenummer: 11002886.7
(22) Anmeldetag: 06.04.2011
(51) Int. Cl.: B60S 9/205, B62D 59/04, B60S 9/215

(54) **ANTRIEBSROLLE FÜR EINEN RANGIERANTRIEB**
FRICTION ROLLER FOR AN AUXILIARY PARKING DRIVE FOR A TRAILER
ROULEAU D'ENTRAÎNEMENT POUR UN MÉCANISME D'ASSISTANCE À LA MANOEUVRES DE REMORQUE

(43) Veröffentlichungstag der Anmeldung: 10.10.2012
(73) Patentinhaber: Truma Gerätetechnik GmbH & Co. KG, 85640 Putzbrunn (DE)
(72) Erfinder: Schmoll, Andreas, 85630 Grasbrunn-Neukeferloh (DE); Möhring, Mario, 85408 Gammelsdorf (DE); Venschott, Matthias, 81825 München (DE); Jäger, Markus, 85635 Höhenkirchen-Siegertsbrunn (DE); Fricke, Gerd, 85630 Neukeferloh (DE); Schaurer, Oliver, 85445 Oberding (DE); Müller, Jörg, 85658 Egmating (DE); Grube, Uwe, 85386 Moosburg (DE); Müller, Thomas, 82229 Seefeld-Unering (DE)
(74) Vertreter: Prinz & Partner mbB

(56) Entgegenhaltungen:
- EP-A1- 1 394 023
- EP-A1- 1 702 835
- EP-A1- 1 714 858
- EP-A1- 1 985 529
- DE-A1- 2 711 214
- DE-B- 1 084 149
- US-A- 4 974 695

## Beschreibung

Die Erfindung betrifft gemäß Patentanspruch 1 einen Rangierantrieb für ein Fahrzeug, der beispielsweise für einen Anhänger, z.B. einen Wohnwagen, verwendet werden kann.

Anhänger werden üblicherweise von Zugfahrzeugen gezogen. Beispielsweise kann ein Personenkraftwagen einen Wohnwagen ziehen. Wenn der Anhänger vom Zugfahrzeug abgenommen ist, wird er üblicherweise von Hand in die endgültige Parkposition geschoben bzw. rangiert. Heute werden jedoch zunehmend Anhänger im Wohnwagenbereich angeboten, die aufgrund ihrer Größe und ihres Gewichts nur noch mit Mühe von Hand verschoben werden können. Daher wurden Rangierantriebe entwickelt, die es ermöglichen, einen Anhänger auch ohne Zugfahrzeug mit Motorunterstützung zu verschieben und/oder zu drehen.

Derartige Rangierantriebe können auch verwendet werden, um Fahrzeuge zu rangieren bzw. zu bewegen, welche zwar über einen eigenen Antrieb verfügen, wobei der Antrieb jedoch nicht in Betrieb oder nicht betriebsfähig ist.

Ein derartiger Rangierantrieb kann beispielsweise eine von einem Antriebsmotor drehend antreibbare Antriebsrolle aufweisen, die zwischen einer Ruheposition, in der die Antriebsrolle von einem Rad bzw. Reifen des Anhängers getrennt ist, und einer Antriebsposition, in der die Antriebsrolle gegen den anzutreibenden Reifen des Anhängers gedrückt ist, bewegbar ist. Das Drehmoment des Antriebsmotors kann beispielsweise über ein Antriebsgetriebe und eine Antriebswelle auf die Antriebsrolle übertragen werden. Ein Beispiel für einen derartigen Rangierantrieb mit Antriebsrolle ist in der EP 1 702 835 A1 der EP 1 836 085 A1 und der EP 1 714 858 A1 beschrieben.

Antriebsrollen für Rangierantriebe sind bekanntermaßen zylinderförmig gestaltet. Es ist weiterhin bekannt, die Oberfläche der Antriebsrolle mit einem Profil zu versehen oder eine gesonderte, beispielsweise aufgeklebte Beschichtung vorzusehen, um eine Übertragung eines Antriebsmoments des Antriebsmotors auf den Reifen zu gewährleisten und ein Durchrutschen zu verhindern.

Ein gattungsgemäßer Rangierantrieb wird von US US 4,974,695 veröffentlicht.

Der Erfindung liegt die Aufgabe zugrunde, einen Rangierantrieb anzugeben, der eine verbesserte Übertragung des Antriebsmoments auf den Reifen auch unter ungünstigen Bedingungen ermöglicht, wie beispielsweise bei Feuchtigkeit, einem schwachen Reifenprofil oder einem niedrigen Luftdruck des Reifens.

Diese Aufgabe wird durch einen Rangierantrieb nach dem unabhängigen Patentanspruch gelöst. Weiterentwicklungen der Erfindung sind den abhängigen Ansprüchen zu entnehmen.

Ein Rangierantrieb für ein Fahrzeug weist eine durch einen Antriebsmotor um eine Rotationsachse drehend antreibbare Antriebsrolle auf, welche in einer Antriebsposition an eine Lauffläche eines Reifens des Fahrzeugs anpressbar und in einer Ruheposition von der Lauffläche lösbar ist. Die Antriebsrolle weist eine mit dem Reifen in Kontakt bringbare Mantelfläche zum Übertragen eines Antriebsmoments des Antriebsmotors auf den Reifen auf. Auf der Mantelfläche ist ein bezogen auf die Rotationsachse näher zur axialen Mitte hin liegender erster Punkt vorgesehen, der einen größeren Radialabstand zu der Rotationsachse aufweist als ein axial dazu nach außen versetzter, weiter entfernt von der axialen Mitte gelegener zweiter Punkt. Die Mantelfläche weist weiterhin einen an eine erste Stirnseite der Antriebsrolle angrenzenden ersten Seitenbereich, einen an eine zweite Stirnseite der Antriebsrolle angrenzenden umschließenden zweiten Seitenbereich und einen zwischen dem ersten Seitenbereich und dem zweiten Seitenbereich liegenden Mittelbereich auf. Der erste Punkt ist in dem Mittelbereich und der zweite Punkt in dem ersten oder zweiten Seitenbereich gelegen. Der erste Punkt weist einen größeren Radialabstand auf als alle in dem ersten und/oder dem zweiten Seitenbereich gelegenen weiteren Punkte der Mantelfläche. Außerdem ist der Radialabstand der Mantelfläche entlang der Rotationsachse im ersten Seitenbereich zunächst gering, steigt dann zum Mittelbereich hin oder in dem Mittelbereich zunächst an bis zu einem Maximum des Radialabstandes im Mittelbereich und nimmt anschließend in dem Mittelbereich oder im zweiten Seitenbereich wieder ab, sodass im mittleren Bereich der Lauffläche der Anpressdruck erhöht wird, wenn die Antriebsrolle mit dem Reifen in Kontakt gebracht ist.

Das Fahrzeug kann beispielsweise ein Anhänger sein, der typischerweise von einem Zugfahrzeug, beispielsweise einem Personenkraftwagen, gezogen wird und daher über keinen eigenständigen Hauptantrieb verfügt. Der Rangierantrieb (Hilfsantrieb) ermöglicht es, den Anhänger auch dann komfortabel zu bewegen und zu rangieren, wenn er vom Zugfahrzeug abgenommen wurde. Das Fahrzeug kann alternativ auch über einen eigenen Antrieb verfügen, welcher jedoch nicht in Betrieb bzw. nicht betriebsbereit sein kann.

Das Fahrzeug bzw. der Anhänger kann beispielsweise ein Wohnwagen oder ein Spezialanhänger für den Freizeitbereich sein, wie beispielsweise ein Bootstrailer oder ein Tiertransporter, z.B. Pferdetransporter. Weiterhin kann das Fahrzeug auch ein Transportanhänger für Personenkraftwagen, Landmaschinen oder Lastkraftwagen sein.

Im Folgenden werden Ausführungsformen des Rangierantriebs beispielhaft im Zusammenwirken mit einem Anhänger beschrieben. Eine entsprechendes Zusammenwirken mit einem Fahrzeug ist ebenfalls möglich.

Der Rangierantrieb kann, wie bereits zum Stand der Technik beschrieben, Antriebseinheiten mit beispielsweise jeweils einem Antriebsmotor, einem Antriebsgetriebe und einer von dem Antriebsmotor über das Antriebsgetriebe drehend antreibbaren Antriebswelle aufweisen. An der Antriebswelle kann eine Antriebsrolle zum Antreiben eines Rades des Anhängers angeordnet bzw. befestigt sein. Die Antriebseinheiten können auf Trägern beispielsweise an einem Rahmen (Trägerrahmen oder Chassis) des Anhängers anordenbar und mit dem Träger beispielsweise derart relativ zu dem Rahmen verschwenkbar sein, dass die Antriebsrolle aus einer von dem anzutreibenden Rad des Anhängers getrennten Ruheposition in eine gegen das Rad des Anhängers gedrückte Antriebsposition bewegbar ist. In der Antriebsposition kann die Antriebsrolle also beispielsweise derart gegen eine Lauffläche eines Reifens des anzutreibenden Rades gedrückt sein, dass ein Antriebsmoment des Antriebsmotors, das über das Antriebsgetriebe und die Antriebswelle auf die Antriebsrolle übertragen wird, reibschlüssig über die Lauffläche des Reifens auf das Rad übertragen wird. Somit kann die Antriebsrolle z.B. durch ein Verschwenken des den Antriebsmotor und die Antriebsrolle tragenden Trägers zwischen der Ruheposition und der Antriebsposition hin- und herbewegbar sein. Auf eine solche Weise kann der Rangierantrieb, wie beispielsweise in der EP 1 836 085 A1 beschrieben, z.B. ein oder zwei Räder des Anhängers antreiben und damit ein Rangieren des Anhängers, eine Kurvenfahrt oder ein Drehen des Anhängers ermöglichen.

Bei einem Anpressen der Antriebsrolle an den Reifen kann der erste Punkt der Mantelfläche mit größerem Radialabstand zur Rotationsachse beispielsweise in einem mittleren Bereich einer Lauffläche des Reifens zu liegen kommen, während der zweite Punkt mit kleinerem Radialabstand zur Rotationsachse näher an einer der Seitenwände des Reifens an die Lauffläche des Reifens gedrückt werden kann. Hierdurch kann in dem mittleren Bereich der Lauffläche der Anpressdruck erhöht werden. Auch dann, wenn beispielsweise mittig an der Lauffläche des anzutreibenden Reifens beispielsweise aufgrund eines geringen Luftdrucks im Reifen ein geringerer Anpressdruck vorliegt als im Bereich der relativ steifen Seitenwände bzw. Flanken des Reifens, kann das Antriebsmoment reibschlüssig auch auf den mittleren Bereich der Lauffläche des Reifens übertragen werden.

Bei einem Anpressen der Antriebsrolle gegen den Reifen kann daher die Mantelfläche der Antriebsrolle auf der Lauffläche des Reifens zu liegen kommen. Der erste Seitenbereich der Antriebsrolle, der an die erste, die Antriebsrolle quer zur Fahrtrichtung begrenzende erste Stirnseite angrenzen kann, kann dabei in einem Bereich einer ersten Flanke bzw. Seitenwand des Reifens aufliegen. Der zweite Seitenbereich der Mantelfläche, der an die zweite, die Antriebsrolle quer zur Fahrtrichtung begrenzende zweite Stirnseite angrenzen kann, kann entsprechend in einem Bereich einer zweiten Flanke bzw. Seitenwand des Reifens zu liegen kommen. Der Mittelbereich der Mantelfläche kann mittig an die Lauffläche angepresst werden, beispielsweise in einen Bereich der Lauffläche mit jeweils vorgegebenem Mindestabstand zu jeder der beiden Flanken des Reifens.

Der erste Seitenbereich der Mantelfläche kann daher einen ersten Abschnitt der Rotationsachse der Antriebsrolle umschließen, wobei der erste seitliche Abschnitt der Rotationsachse beispielsweise die Punkte der Rotationsachse enthalten kann, die von einem Mittelpunkt der Rotationsachse der Antriebsrolle zur ersten Stirnseite hin einen vorgegebenen Mindestabstand haben. Entsprechend kann der zweite Seitenbereich einen zweiten seitlichen Abschnitt der Rotationsachse der Antriebsrolle umschließen, wobei der zweite seitliche Abstand die Punkte der Rotationsachse enthalten kann, welche der zweiten Stirnseite zugewandt einen weiteren vorgegebenen Mindestabstand zum Mittelpunkt der Rotationsachse aufweisen. Der Mittelbereich der Mantelfläche kann einen mittleren Abschnitt der Rotationsachse umschließen, welcher diejenigen Punkte der Rotationsachse umfasst, die beispielsweise weniger Abstand zum Mittelpunkt der Rotationsachse als einen vorgegebenen Maximalabstand aufweisen.

In dem ersten und in dem zweiten Seitenbereich kann die Mantelfläche einen kleineren Abstand zur Rotationsachse aufweisen als in dem Mittelbereich. Insbesondere kann der Abstand der Mantelfläche zur Rotationsachse in dem in dem Mittelbereich gelegenen ersten Punkt größer sein als in dem axial dazu versetzten zweiten Punkt mit größerem Abstand zum Mittelpunkt der Rotationsachse, welcher in einem der Seitenbereiche gelegen sein kann.

Wenn beispielsweise die Mantelfläche - ohne ein möglicherweise zusätzlich auf der Mantelfläche aufgebrachtes Profil betrachtet - im Wesentlichen konzentrische, senkrecht oder schräg zur Rotationsachse stehende Kreise um die Rotationsachse enthält bzw. durch solche gebildet ist, können die Radien dieser Kreise in dem ersten und zweiten Seitenbereich geringer sein als in dem Mittelbereich. Beispielsweise können die Radien einiger Kreise im ersten oder zweiten Seitenbereich geringer sein als die Radien einiger Kreise im Mittelbereich. Ebenso können auch alle Kreise im ersten und/oder zweiten Seitenbereich einen geringeren Radius als alle Kreise im Mittelbereich aufweisen. Ein jeweiliger Durchmesser bzw. Radius der Antriebsrolle ist damit in den Seitenbereichen im Wesentlichen geringer als in dem Mittelbereich. Entlang der Rotationsachse kann der Radius daher in dem ersten Seitenbereich zunächst gering sein, dann zum Mittelbereich hin oder in dem Mittelbereich zunächst ansteigen bis zu einem Maximum des Radius im Mittelbereich und anschließend in dem Mittelbereich oder im zweiten Seitenbereich wieder abnehmen. Auch andere Verläufe des Radius entlang der Rotationsachse sind denkbar, beispielsweise mehrfach ansteigend und absinkend, soweit die Mantelfläche in dem Mittelbereich einen größeren Abstand zur Rotationsachse aufweist als in den Seitenbereichen.

Wenn die Mantelfläche beispielsweise ein zusätzlich zu einer Grundfläche der Mantelfläche aufgebrachtes Profil aufweist, können der erste und der zweite Punkt in entsprechender Position in Bezug auf das Profil gewählt werden. Weist die Mantelfläche beispielsweise ein gewelltes oder geripptes Profil auf, können der erste und der zweite Punkt beispielsweise außen auf einer der Wellen oder Rippen liegend gewählt werden. Bei einem Profil mit im Wesentlichen in Richtung einer Rotationsachse verlaufenden Rippen können der erste und der zweite Punkt beispielsweise axial zueinander versetzt, d.h. auf ein und derselben Rippe, Welle oder in ein und derselben Senke des Profils gelegen gewählt werden. Ein jeweiliger Abstand der Mantelfläche kann daher auf einer der Rippen, Wellen oder Senken betrachtet werden. In diesem Fall ist der Abstand der Mantelfläche zur Rotationsachse beispielsweise entlang der Rippe, Welle oder Senke in dem ersten und zweiten Seitenbereich im Wesentlichen geringer als in dem Mittelbereich. Entlang einer Rippe, Welle oder Senke kann der Abstand daher in dem ersten Seitenbereich geringer sein, dann zum Mittelbereich hin oder in dem Mittelbereich ansteigen bis zu einem Maximum und anschließend im Mittelbereich oder im zweiten Seitenbereich wieder abnehmen. Auch andere Verläufe des Abstands entlang einer Rippe, Welle oder Senke sind denkbar, beispielsweise mehrfach ansteigend und absinkend, soweit die Mantelfläche in dem Mittelbereich einen größeren Abstand zur Rotationsachse aufweist als in den Seitenbereichen.

Bei einer andersartigen Profilierung der Seitenfläche können der erste und zweite Punkt beispielsweise entsprechend in Bezug auf das Profil gelegen sein. Beispielsweise können der erste und zweite Punkt beide jeweils auf einer äußeren Anpressfläche des Profils oder beide jeweils in einer Profilsenke angeordnet sein.

Durch den größeren Radius der Mantelfläche der Antriebsrolle im Mittelbereich im Vergleich zu den jeweiligen Radien in den Seitenbereichen kann ein Antriebsmoment des Antriebsmotors über die Antriebsrolle beispielsweise reibschlüssig sowohl über die Bereiche nahe der ersten und zweiten Seitenwand des Reifens als auch mittig über die Lauffläche des Reifens auf das Rad des Anhängers übertragen werden. Auch dann, wenn beispielsweise mittig an der Lauffläche des anzutreibenden Reifens aufgrund eines geringen Luftdrucks im Reifen ein geringerer Anpressdruck vorliegt als im Bereich der relativ steifen Seitenwände bzw. Flanken des Reifens, kann das Antriebsmoment reibschlüssig über die gesamte Breite der Antriebsrolle bzw. Lauffläche des Reifens übertragen werden. Weiterhin kann auch bei einer geringeren Traktion des Reifens mittig an der Lauffläche, beispielsweise durch ein stark abgefahrenes Profil oder durch Verschmutzungen oder Nässe, das Antriebsmoment über die gesamte Breite des Antriebsrolle bzw. der Lauffläche übertragen werden, da durch den größeren Radius der Mantelfläche der Antriebsrolle im Mittelbereich der Anpressdruck mittig auf die Lauffläche erhöht werden kann. Hierdurch kann ein stabiler Reibschluss über die gesamte Breite der Antriebsrolle bzw. der Lauffläche des Reifens gewährleistet und ein Durchrutschen verhindert werden. Folglich kann das Antriebsmoment mit verbessertem Reibschluss auch in dem auf dem mittleren Bereich der Lauffläche zu liegen kommenden Mittelbereich übertragen werden.

Die Abnahme des Radius entlang der Achse der Antriebsrolle kann - ausgehend vom Maximalradius im Mittelbereich - bis zu 10 mm betragen. Eine besonders geeignete Radiusabnahme liegt in einem Bereich von 1 mm bis 5 mm, bzw. in einem Bereich von 0,5 bis 10 Prozent. Die Differenz des Abstands in dem ersten und zweiten Punkt jeweils zur Rotationsachse kann demnach in Bezug auf den beispielsweise maximalen Abstand der Mantelfläche von der Rotationsachse geeignet gewählt werden und beispielsweise auch gering sein. Bei einer Antriebsrolle mit einer Breite bzw. einem Abstand der ersten und zweiten Stirnseite von ca. 115 mm und einem Abstand des ersten Punktes von der Rotationsachse von ca. 40 mm (entspricht einem Durchmesser von 80 mm) kann in dem zweiten Punkt der Abstand beispielsweise in einem Intervall von 35 mm bis 38 mm (entsprechend einem Durchmesser von 70 mm bis 76 mm) liegen.

In einer weiteren Ausführungsform kann die Mantelfläche wenigstens im Mittelbereich eine konvexe Wölbung, beispielsweise eine Außenwölbung weg von der Rotationsachse aufweisen. Die konvexe Wölbung kann sich über den Mittelbereich oder beispielsweise auch über den Mittelbereich und den ersten und zweiten Seitenbereich erstrecken. In diesem Bereich kann die Antriebsrolle mittig verbreitert bzw. verdickt sein und beispielsweise eine fassartige Außenkontur aufweisen. Hierdurch kann ein verbesserter Reibschluss zu dem Reifen erreicht werden. Weiterhin können über die konvexe Wölbung Verunreinigungen und Wasser, welche den Reibschluss möglicherweise ungünstig beeinflussen, einfach von der Mantelfläche über die Außenwölbung nach außen abgeführt werden. Auch durch eine geringfügige konvexe Wölbung in Bezug auf eine zusätzliche Profilierung der Mantelfläche kann dieser Effekt erreicht werden.

Beispielsweise kann die Außenwölbung in Form einer Bombierung der Antriebsrolle erzeugt werden. Die Bombierung der Rolle kann in einem Herstellungsprozess beispielsweise durch Innendruck oder durch Verwendung einer entsprechend geformten Gießform erreicht werden. Bei Verwendung einer Gießform kann ein beliebiges Gussverfahren, beispielsweise einen Druckgussverfahren, angewendet werden. Die durch das Bombieren entstehenden Aushebeschrägen der Mantelfläche können das Lösen aus der Gießform vereinfachen.

In einer weiteren Variante kann der Mittelbereich einen im Wesentlichen senkrecht oder schräg zur Rotationsachse stehenden, geschlossenen Kurvenzug mit maximalem Abstand zur Rotationsachse, beispielsweise mit axial entlang der Rotationsachse oszillierendem Versatz aufweisen. Der Kurvenzug kann schmal, beispielsweise in Form einer kurvig oder eckig gezogenen Linie ausgeführt sein, oder ein Band mit Punkten mit maximalem Abstand zur Rotationsachse und einer vorgegebenen Breite bzw. Mindestbreite umfassen. Bei schmaler Gestaltung des geschlossenen Kurvenzugs können die Seitenbereiche beispielsweise direkt an den durch den Kurvenzug gebildeten Mittelbereich derart anschließen, dass dieser im Wesentlichen einen Anstoßbereich, eine Anstoßnaht bzw. eine Anstoßlinie des ersten und zweiten Seitenbereichs bildet.

Bei im Wesentlichen kurviger Gestaltung des Kurvenzugs kann dieser beispielsweise eine mäanderförmige Linie bzw. ein Mäanderband bilden. Bei im Wesentlichen eckiger Gestaltung des Kurvenzugs kann dieser beispielsweise einen Polygonzug bilden. Der Kurvenzug kann auch gerade, also in Form eines senkrecht oder schräg zur Rotationsachse stehenden Rings fester oder variabler Breite geformt sein. In Fall eines senkrecht zur Rotationsachse stehenden Rings ist der axial entlang der Rotationsachse oszillierende Versatz minimal bzw. gleich Null.

Bei einer Rotation einer derartig gestalteten Antriebsrolle beim Antreiben des Reifens verschiebt sich der Bereich der Auflage des Mittelbereichs der Mantelfläche auf der Lauffläche des Reifens oszillierend längs der Rotationsachse. Hierdurch kann ein verbesserter Reibschluss und gleichzeitig eine gleichmäßige Abnutzung des Reifens an seiner Lauffläche erreicht werden.

Weiterhin kann eine mechanische Verbindung von Hälften der Antriebsrolle in dem Anstoßbereich bzw. der Anstoßnaht in einem Kurvenzug mit oszillierendem Versatz vergleichsweise stabil sein, da durch den kurvigen Versatz ein direktes Einwirken von möglicherweise auf die beiden Hälften ungleichmäßig aufgebrachten Traktionskräften auf die Anstoßnaht verhindert bzw. gemildert wird.

In einer weiteren Ausführungsform kann der Mittelbereich von dem ersten und/oder zweiten Seitenbereich durch eine Stufe mit beispielsweise sprunghafter Änderung des Abstands der Mantelfläche von der Rotationsachse getrennt sein. Beispielsweise kann der Abstand der Mantelfläche vom Mittelbereich zum ersten und/oder zweiten Seitenbereich hin sprunghaft abnehmen. Durch die Stufe kann eine sprunghafte Änderung des Abstands der Mantelfläche von der Rotationsachse erreicht werden, die der Tatsache Rechnung tragen kann, dass der Reifen im Bereich seiner Seitenwände eine sehr hohe Steifigkeit aufweisen kann, während er in der Mitte der Lauffläche eine wesentlich geringere Steifigkeit haben kann. Die Stufe kann durch Rundungen oder Abschrägungen gemildert sein.

Weiterhin kann die Mantelfläche wie vorn bereits beschrieben ein Profil mit stufig erhöhten Anpressflächen zum Anpressen an den Reifen aufweisen. Die Anpressflächen können, beispielsweise mit dem Ziel der Erreichung einer möglichst guten Traktion bzw. eines möglichst guten Reibschlusses zur Übertragung des Antriebsmoments auf das Rad, beliebig gestaltet sein. Beispielsweise können sie geeignet zum Eingriff in ein Profil der Lauffläche des Reifens gewählt sein.

Die Anpressflächen des Profils können im Mittelbereich größer gewählt sein als im ersten und/oder zweiten Seitenbereich. Durch das verstärkte Profil im verbreiterten Mittelbereich kann eine weiter verbesserte Momentübertragung erreicht werden.

In einer Variante kann das Profil beispielsweise eine rippenartige Struktur mit längs zur Rotationsachse verlaufenden Rippen aufweisen. Diese Rippen können beispielsweise nach Art eines Zahnkranzes in das Profil der Lauffläche des Reifens eingreifen und eine gute Traktion sicherstellen. Das Profil der Rippen kann im Querschnitt wellenförmig, sinusförmig, zahnförmig, stufig oder blockartig sein. Eine wellenförmige Rippenstruktur kann dabei eine beispielsweise bombierte oder mittig verbreiterte Grundform der Mantelfläche überlagern.

In dem Mittelbereich können die Rippen breiter als in dem ersten und/oder zweiten Seitenbereich gestaltet sein, um das Antriebsmoment auch auf die Mitte der Lauffläche mit gutem Reibschluss zu übertragen.

In einer weiteren Ausführungsform kann das Profil der Mantelfläche in dem ersten Seitenbereich zu dem Profil der Mantelfläche in dem zweiten Seitenbereich in Umfangsrichtung, d.h. tangential um die Rotationsachse versetzt sein. Durch den Versatz beim Profileingriff kann gewährleistet werden, dass immer mehrere Anpressflächen angepresst bzw. mehrere Rippen im Eingriff sind, wodurch ein weiter verbesserter Reibschluss und damit eine weiter verbesserte Momentübertragung erreicht werden kann. Weist in dieser Ausführungsform der Mittelbereich eine Anstoßlinie zwischen dem ersten und zweiten Seitenbereich auf, so kann diese wie bereits beschrieben kurvig in Form eines Mäanderzuges oder eckig in Form eines Polygonzugs gestaltet sein oder als schräg zur Rotationsachse stehender Ring ausgebildet sein. Hierdurch kann die besondere Beanspruchung der Lauffläche des Reifens durch die Auflage der Anstoßlinie mit versetztem Profil über eine größere Breite verteilt werden. So kann trotz des Profilversatzes in der Anstoßlinie eine im Wesentlichen gleichmäßige Reifenabnutzung erreicht werden.

In einer weiteren Ausführungsform kann die Antriebsrolle einen über den Mittelbereich der Mantelfläche angeordneten Überzug zum Anpressen an den Reifen aufweisen. Ein derartiger Rollenüberzug z.B. aus Gummi oder Neopren kann als umlaufendes Band, offene Hülle oder auch als Hülse mit einem über eine Stirnseite der Rolle zu ziehenden Deckel ausgebildet sein. Das Profil kann beispielsweise in den Rollenüberzug eingepresst bzw. eingefräst sein. Durch die Verwendung eines Überzugs aus einem Material mit einem guten Reibwert und damit guter Traktion mit oder ohne eine geeignete Profilierung kann der Reibschluss und damit die Traktion der Antriebsrolle weiter verbessert werden.

Der über dem Mittelbereich angeordnete Überzug kann durch den größeren Abstand des Mittelbereichs zur Rotationsachse fixiert sein. Beispielsweise kann der Überzug die Antriebsrolle in dem ersten und/oder zweiten Seitenbereich derart fest und eng umschließen, dass ein Abrutschen des Überzugs über den verbreiterten Mittelbereich verhindert wird, beispielsweise weil das Material des Überzugs eine entsprechende Dehnung nicht oder kaum erlaubt. Dies kann beispielsweise durch eine konvexe Wölbung des Mittelbereichs bzw. der gesamten Mantelfläche und/oder durch die den Mittelbereich von dem ersten und/oder zweiten Seitenbereich trennende Stufe erreicht werden.

In einer weiteren Ausführungsform kann die Mantelfläche durch Innenrippen mit einem Träger, der mit der durch den Antriebsmotor angetriebenen Antriebswelle gekoppelt sein kann, verbunden sein. Die Innenrippen können im Mittelbereich beispielsweise breiter als im ersten und/oder zweiten Seitenbereich ausgeführt sein. Hierdurch kann eine verbesserte Stabilität der Antriebsrolle im verbreiterten Mittelbereich erreicht werden. Weiterhin können die Innenrippen zum Träger hin verbreitert sein, um eine verbesserte Kraftübertragung und Stabilität zu gewährleisten.

Diese und weitere Merkmale der Erfindung werden nachfolgend anhand von Beispielen unter Zuhilfenahme der begleitenden Figuren näher erläutert. Es zeigen:
- **Fig**. **1**: einen Anhänger mit einem relativ zu einem Rahmen des Anhängers verschwenkbaren Rangierantrieb mit einer Antriebsrolle in einer Seitenansicht,
- **Fig. 2a**: einen Rangierantrieb mit bombierter Antriebsrolle in einer von einem Reifen entfernten Position,
- **Fig. 2b**: den Rangierantrieb aus Fig. 2a in einer an den Reifen angepressten Position,
- **Fig. 3a**: schematisch die bombierte Rolle aus den Fig. 2a und 2b in einer Schnittansicht mit Schnittebene durch die Rotationsachse,
- **Fig. 3b**: eine weitere Antriebsrolle mit einem achteckigen Querschnitt in der Schnittebene durch die Rotationsachse,
- **Fig. 3c**: eine weitere Antriebsrolle mit einem sechseckigen Querschnitt in der Schnittebene durch die Rotationsachse,
- Fig. 3d: eine weitere Antriebsrolle, die nicht Teil der Erfindung ist, mit einem stufig begrenzten Mittelbereich in einem Querschnitt mit Schnittebene durch die Rotationsachse,
- Fig. 3e: eine weitere Antriebsrolle mit einem stufig begrenzten, schmalen Mittelbereich und schrägen Seitenbereichen in einem Querschnitt mit Schnittebene durch die Rotationsachse,
- Fig. 4a: eine Rolle mit einem mäanderförmigen geschlossenen Kurvenzug im Mittelbereich,
- Fig. 4b: eine weitere Antriebsrolle mit einem schräg zur Rotationsachse stehenden Ring im Mittelbereich,
- Fig. 5a: eine Antriebsrolle mit axial versetztem Rippenprofil der Seitenbereiche in einer perspektivischen Sicht,
- Fig. 5b: einen ersten Querschnitt der in Fig. 5a gezeigten Antriebsrolle,
- Fig. 5c: einen zweiten Querschnitt der in Fig. 5a gezeigten Antriebsrolle,
- Fig. 6a: eine bombierte Antriebsrolle mit einem Überzug in einem Querschnitt mit Schnittebene durch die Rotationsachse,
- Fig. 6b: eine Antriebsrolle mit stufigem Mittelbereich und schrägen Seitenbereichen und mit einem Überzug in einem Querschnitt mit Schnittebene durch die Rotationsachse, und
- Fig.7: eine bombierte Antriebsrolle, die nicht Teil der Erfindung ist, mit welligem Profil und vergleichsweise geringer Außenwölbung.

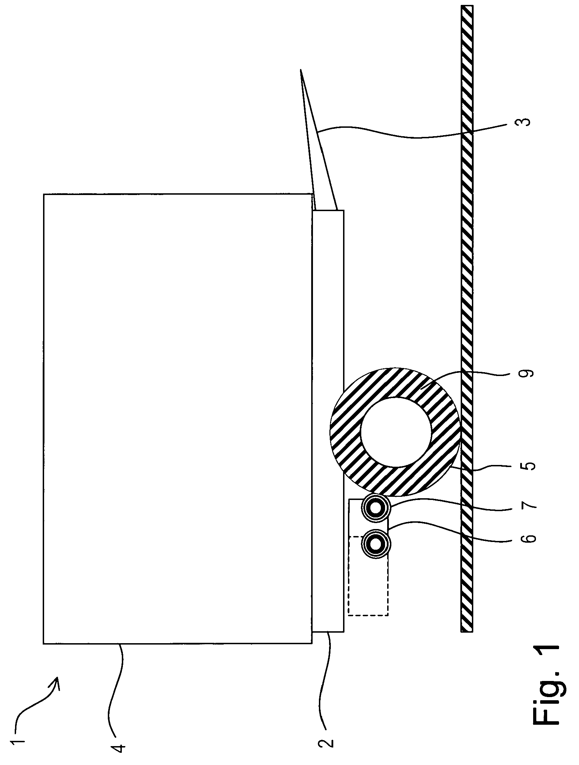

Fig. 1 zeigt als Beispiel für ein anzutreibendes Fahrzeug einen Anhänger 1 mit einem Rahmen 2, wie beispielsweise einem Chassis-Rahmen bzw. einem Trägerrahmen, an dem eine Zugvorrichtung 3 in Form einer Deichsel zum Ankuppeln des Anhängers 1 an eine Kupplung eines Zugfahrzeugs (nicht gezeigt) angeordnet ist. Auf dem Rahmen 2 ist weiterhin ein Aufbau 4 wie beispielsweise eine Wohnkabine befestigt. Zudem ist an dem Rahmen 2 beispielsweise an einem Fahrwerk (nicht gezeigt) ein Rad 5 gehalten, welches über einen Rangierantrieb 6 mit einer Antriebsrolle 7 antreibbar ist.

Der Rangierantrieb 6 kann, wie vorn bereits beschrieben, einen Antriebsmotor (nicht gezeigt), ein Antriebsgetriebe (nicht gezeigt) und eine von dem Antriebsmotor über das Antriebsgetriebe drehend antreibbare Antriebswelle 8 (nicht in Fig. 1, aber in weiteren Figuren gezeigt) mit der daran angeordneten Antriebsrolle 7 aufweisen. Weiterhin kann eine Steuerungseinheit (nicht gezeigt) zum Ansteuern des Antriebsmotors vorgesehen sein. Der Rangierantrieb 6 kann mit Hilfe eines Trägers derart relativ zum Rahmen 2 des Anhängers 1 verschwenkbar sein, dass die Antriebsrolle 7 aus einer von dem anzutreibenden Rad 5 des Anhängers 1 getrennten Ruheposition (mit gestrichelten Linien dargestellt) in eine gegen eine Lauffläche eines Reifens 9 des Rades 5 des Anhängers gedrückte Antriebsposition (mit durchgezogenen Linien dargestellt) bewegbar ist.

An einem weiteren Rad des Anhängers 1, welches beispielsweise an einer gegenüberliegenden Seite des Anhängers 1 angeordnet sein kann, kann ein weiterer Rangierantrieb (nicht gezeigt) in entsprechender Weise angeordnet sein.

Durch das Ansteuern des Antriebsmotors kann die in der Antriebsposition befindliche Antriebsrolle 7 drehend betrieben werden und ein Antriebsmoment des Antriebsmotors auf das Rad 5 des Anhängers 1 übertragen. Hierdurch kann der Anhänger 1 ohne Antrieb durch das Zugfahrzeug beispielsweise in eine Parkposition manövriert werden. Sind an zwei beispielsweise gegenüberliegenden Rädern des Anhängers 1 Rangierantriebe vorgesehen, so kann durch ein Ansteuern der jeweiligen Antriebsmotoren zum Antreiben der jeweiligen Antriebsrollen mit jeweils verschiedener, eventuell auch verschieden gerichteter Geschwindigkeit der Anhänger 1 in eine Kurvenfahrt bzw. Drehbewegung versetzt werden.

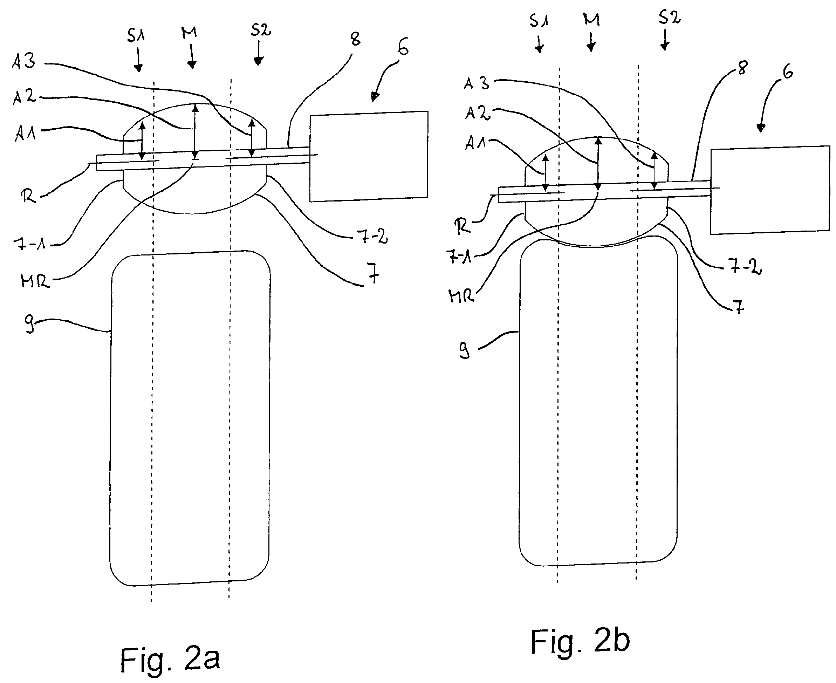

In der Fig. 2a ist die in Fig. 1 gezeigte Antriebsrolle 7 des Rangierantriebs 6 in der von dem Reifen 9 entfernten Ruheposition in einer Aufsicht gezeigt. In der Aufsicht ist die Antriebswelle 8 des Rangierantriebs 6 zu sehen, über die das Drehmoment des Antriebsmotors auf die Antriebsrolle 7 übertragen wird. Durch das Drehmoment wird die Antriebsrolle 7 in eine Rotation um eine Rotationsachse R versetzt wird.

Durch die gestrichelten Linien sind ein Mittelbereich M, ein erster Seitenbereich S1 und ein zweiter Seitenbereich S2 einer die Antriebsrolle 7 umschließenden Mantelfläche kenntlich gemacht. Es ist ersichtlich, dass der erste Seitenbereich S1 alle diejenigen Punkte der Mantelfläche umfasst, die weniger als einen vorgegebenen Maximalabstand zu einer ersten Stirnseite 7-1 der Antriebsrolle 7 haben. Ebenso umfasst der zweite Seitenbereich S2 alle diejenigen Punkte der Mantelfläche, die weniger als den vorgegebenen Maximalabstand zu einer der ersten Stirnseite 7-1 gegenüberliegenden zweiten Stirnseite 7-2 der Antriebsrolle 7 haben. Weiterhin ist ersichtlich, dass der Mittelbereich M alle diejenigen Punkte der Mantelfläche umfasst, welche den vorgegebenen Maximalabstand zur ersten Stirnseite 7-1 und zur zweiten Stirnseite 7-2 überschreiten. Beispielsweise kann der Mittelbereich M alle diejenigen Punkte der Rotationsachse R umschließen, die von einem Mittelpunkt der Rotationsachse MR weniger als einen weiteren vorbestimmten Maximalabstand entfernt sind.

In Fig. 2b ist der in Fig. 2a gezeigte Rangierantrieb 6 in der Antriebsposition gezeigt, in der die Antriebsrolle 7 beispielsweise durch ein Verschwenken des Rangierantriebs 6 relativ zum Rahmen 2 des Anhängers 1 gegen den Reifen 9 gedrückt ist. Es wird deutlich, dass hierbei der Mittelbereich M der Mantelfläche der Antriebsrolle 7 gegen einen mittleren Bereich einer den Reifen umschließenden Lauffläche gedrückt wird, während die Seitenbereiche S1 und S2 der Mantelfläche jeweils gegen flankennahe seitliche Bereiche des Reifens 9 zu liegen kommen.

Es wird deutlich, dass der Reifen 9 in den flankennahen seitlichen Bereichen dem durch die Antriebsrolle 7 aufgebrachten Druck besser standhalten kann als im mittleren Bereich der Lauffläche, der durch den Mittelbereich M der Mantelfläche eingedrückt wird. Trotz des Nachgebens im mittleren Bereich der Lauffläche des Reifens kann durch die sich über den ersten und zweiten Seitenbereich S1, S2 und den Mittelbereich M erstreckende konvexe Wölbung der Mantelfläche im mittleren Bereich der Lauffläche des Reifens 9 ein hoher Anpressdruck und damit ein guter Reibschluss erzeugt werden. Hierdurch kann ein Antriebsmoment des Rangierantriebs 6 auch im mittleren Bereich M der Mantelfläche effektiv auf den Reifen 9 übertragen werden.

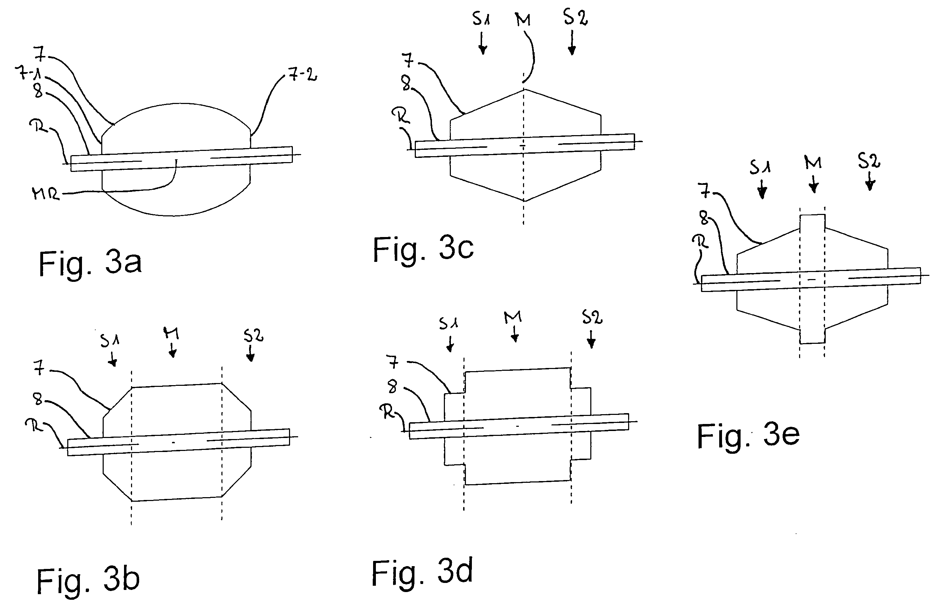

In den Fig. 3a bis 3e sind schematisch verschiedene Ausführungsformen der Antriebsrolle 7 jeweils in einer Schnittansicht in einer entlang der Rotationsachse R verlaufenden Schnittebene zu sehen. In allen Darstellungen der Fig. 3a bis 3e sind Radiusunterschiede zwischen dem Mittelbereich M und den Seitenbereichen S1 S2 zur Verdeutlichung übergroß dargestellt. Sie können in der Realität sehr viel geringer sein. Weiterhin können in der Realität die in den Fig. 3a bis 3e schematisch dargestellten Übergänge zwischen dem Mittelbereich M und den Seitenbereichen S1, S2 abgerundet oder abgeschrägt sein, um eine gute Auflage auf der Lauffläche der Reifens 9 zu ermöglichen.

Fig. 3a zeigt die Antriebsrolle 7 aus Fig. 2 mit einer sich zum Mittelpunkt MR der Rotationsachse hin verstärkenden Verdickung bzw. Verbreiterung, also z.B. Bombierung des Rollendurchmessers bzw. des Abstands der Mantelfläche der Antriebsrolle 7 zur Rotationsachse R. Hierbei nimmt der Radius der Mantelfläche von der ersten Stirnseite 7-1 zum Mittelpunkt MR der Rotationsachse hin monoton zu bis zu einem Maximum über dem Mittelpunkt MR der Rotationsachse. Anschließend nimmt der Radius der Mantelfläche bis zur zweiten Stirnseite 7-2 monoton ab. Die gezeigte Gestaltung kann beispielsweise durch eine Bombierung der Antriebsrolle im Herstellprozess erreicht werden, was - wie vorn bereits beschrieben - den Herstellprozess erleichtern und die Stabilität der Rolle erhöhen kann.

Fig. 3b zeigt eine weitere mögliche Ausführungsform der Antriebsrolle 7 mit einer im Mittelbereich M in gleichmäßigem bzw. konstantem Abstand zur Rotationsachse R verlaufenden Mantelfläche, welche in den Seitenbereichen S1, S2 nach außen abgeschrägt ist. Hierdurch wird eine feste Auflage der Mantelfläche in einem mittleren Bereich der Lauffläche des Reifens 9 bei gleichzeitig schwächerer Auflage der Mantelfläche in den flankennahen, seitlichen Bereichen des Reifens 9 erreicht. Dies ermöglicht einen im Wesentlichen gleichmäßigen Reibschluss zwischen der Antriebsrolle 7 und dem Reifen 9 mit guter Traktion.

In Fig. 3c ist eine weitere Ausführungsform der Rolle 7 gezeigt, bei der der Mittelbereich M schmal und im Wesentlichen als Anstoßlinie zwischen den die Mantelfläche hälftig aufteilenden Seitenbereichen S1, S2 ausgeführt ist. Die schräg zur Rotationsachse geneigten Seitenbereiche S1, S2 der Mantelfläche ermöglichen neben dem zu den flankennahen seitlichen Bereichen des Reifens 9 abfallenden Anpressdruck auch ein einfaches Ablaufen bzw. Abführen von Wasser und Verschmutzungen beispielsweise beim Einsatz der Antriebsrolle 7 in freiem Gelände.

Die in Fig. 3d gezeigte Ausführungsform der Antriebsrolle 7 weist eine stufige Trennung des Mittelbereichs M von den Seitenbereichen S1 S2 mit sprunghafter Änderung bzw. Verminderung des Abstands der Mantelfläche von der Rotationsachse R auf. Die Stufe kann zusätzlich abgeschrägt oder abgerundet sein. Diese Gestaltung ermöglicht es, den Anpressdruck der Rolle 7 gegen den Reifen 9 in den flankennahen Seitenbereichen des Reifens 9 wesentlich gegenüber dem Anpressdruck im mittleren Bereich der Lauffläche des Reifens 9 abzusenken. Hierdurch kann eine im Wesentlichen gleichmäßige Traktion über die gesamte Breite des Reifens 9 erreicht werden.

In Fig. 3e ist eine weitere Ausführungsform der Antriebsrolle 7 mit schmalem, stufig von den Seitenbereichen S1, S2 getrenntem Mittelbereich M dargestellt. Durch den großen Abstand der Mantelfläche der Antriebsrolle 7 von der Rotationsachse R in dem schmalen Mittelbereich M kann dort ein besonders guter Reibschluss erzeugt werden, während die abgeschrägten Seitenbereiche S1, S2 ein Abführen von Verschmutzung und Wasser erleichtern.

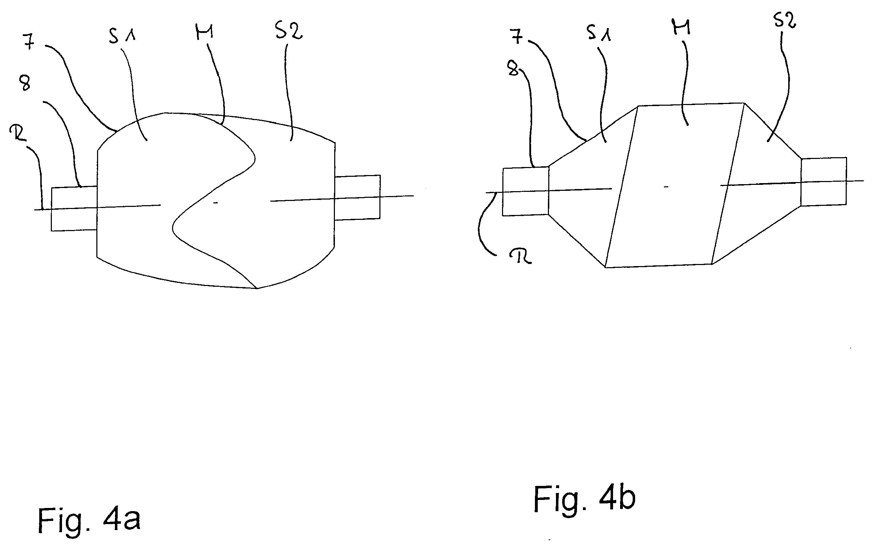

In Fig. 4a ist eine Ausführungsform einer Antriebsrolle 7 gezeigt, bei der der Mittelbereich einen geschlossenen Kurvenzug aufweist, welcher eine Anstoßlinie mit jeweils maximalem Abstand zur Rotationsachse im Vergleich zu seinen Umgebungspunkten und zu Punkten der Seitenbereiche S1, S2 aufweist. Der Kurvenzug verläuft in Form eines Mäanderzugs mit axial entlang der Rotationsachse R oszillierendem Versatz. Alternativ kann der Kurvenzug auch eckig in Form eines Polygonzugs gestaltet sein. Durch den oszillierenden axialen Versatz kann ein guter Reibschluss an der Lauffläche des Reifens 9 bei gleichzeitig gleichmäßiger Reifenabnutzung erreicht werden.

In Fig. 4b ist der Mittelbereich M als schräg zur Rotationsachse verlaufender Ring bzw. schräg zur Rotationsachse verlaufendes Band ausgebildet, was ebenfalls zu einem oszillierenden Versatz des aufliegenden Teils des Mittelbereichs M der Mantelfläche der Antriebsrolle 7 auf der Lauffläche des Reifens 9 beim Antreiben führt. Auch hierdurch kann ein guter Reibschluss bei weitgehend gleichmäßiger Reifenabnutzung erreicht werden.

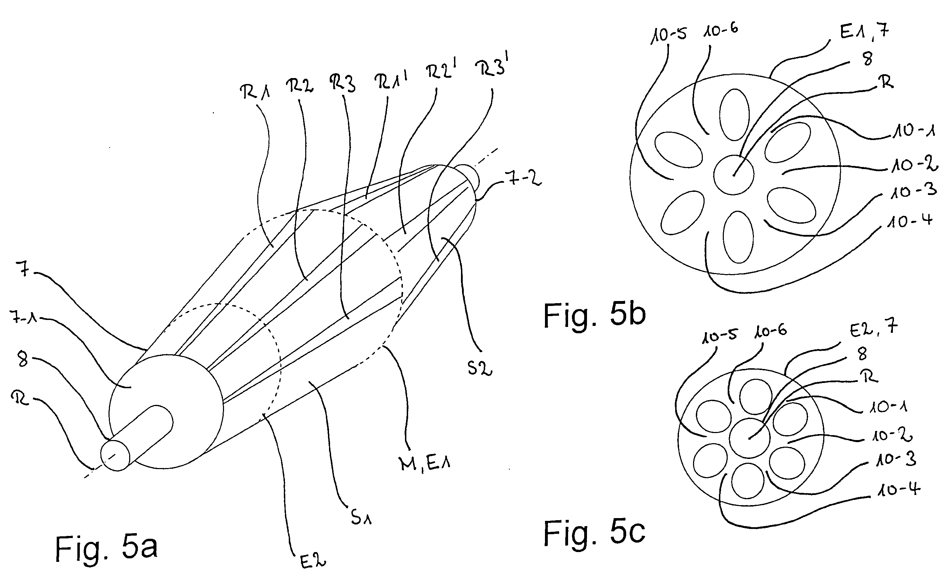

In Fig. 5a ist schematisch in perspektivischer Ansicht eine weitere Ausführungsform der Antriebsrolle 7 mit einer im Wesentlichen der in Fig. 3c gezeigten Schnittansicht folgenden Gestaltung gezeigt. Die Mantelfläche weist in dieser Ausführungsform ein Profil mit stufig erhöhten Anpressflächen in Form von im Wesentlichen längs zur Rotationsachse verlaufenden, über den Umfang verteilten Rippen R1, R2, R3, R1', R2' und R3' auf.

Die Rippen R1, R2 und R3 des ersten Seitenbereichs sind dabei zu den Rippen R1' R2' und R3' des zweiten Seitenbereichs in Umfangsrichtung versetzt. Der Versatz unterstützt einen versetzten und dadurch verbesserten Eingriff der Rippen R1, R2, R3, R1', R2' und R3' in ein Laufflächenprofil des Reifens 9.

Weiterhin sind die Rippen R1, R2, R3, R1', R2' und R3' zum Mittelbereich M hin verdickt und zu den Stirnseiten 7-1, 7-2 hin schmaler ausgeführt. Dies führt zu einer Vergrößerung der Anpressflächen zum Mittelbereich hin und kann daher die Momentübertragung in dem verbreiterten Mittelbereich verbessern.

In den Fig. 5b und 5c sind Schnittansichten der in Fig. 5a gezeigten Antriebsrolle 7 durch die Schnittebenen E1 und E2 gezeigt. Fig. 5b zeigt einen Schnitt durch die Schnittebene E1 im verbreiterten Mittelbereich M, während Fig. 5c einen Schnitt durch die Schnittebene E2 im schmaleren Seitenbereich S1 zeigt.

In den Schnittansichten wird deutlich, dass die Mantelfläche der Antriebsrolle 7 durch eine Trägerkonstruktion gegen einen die Antriebswelle 8 umschließenden Träger abgestützt wird. Hierfür sind Innenrippen 10-1 bis 10-6 vorgesehen, die in der mittig die Antriebsrolle 7 schneidenden Ebene E1 breiter ausgeführt sind als in der die Antriebsrolle 7 seitlich schneidenden Ebene E2. Durch die Verbreiterung der Innenrippen zum Mittelbereich hin kann eine verbesserte Momentübertragung ereicht werden. Weiterhin wird eine Stabilität und Haltbarkeit der Antriebsrolle unterstützt.

Weiterhin ist aus der Ausführungsform deutlich, dass die Innenrippen 10-1 bis 10-6 zur Antriebswelle 8 hin und/oder zur Mantelfläche hin verbreitert sein können, um eine verbesserte Kraftübertragung bzw. einen verbesserten Kraftfluss zu ermöglichen.

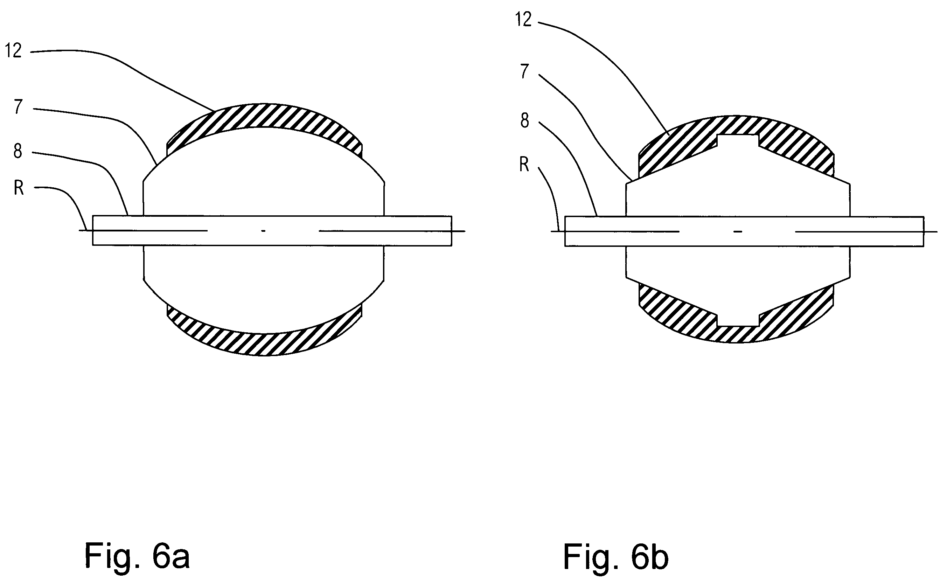

In Fig. 6a ist eine Variante der in Fig. 2a gezeigten Antriebsrolle 7 mit einem über den Mittelbereich der Mantelfläche angeordneten Überzug 12 gezeigt. Der Überzug 12 kann aus einem Material mit einem guten Reibwert wie beispielsweise Neopren oder Gummi gefertigt sein und beim Anpressen der Antriebsrolle 7 an den Reifen 9 in der Antriebsstellung eine verbesserte Momentübertragung ermöglichen. Da der Überzug 12 über die mittig verbreiterte Mantelfläche der Antriebsrolle 7 gezogen ist, hält der verbreiterte Mittelbereich den Überzug axial zur Rotationsachse R und verhindert so ein seitliches Abrutschen des Überzugs 12.

In Fig. 6b ist Variante der in Fig. 3e gezeigten Antriebsrolle 7 mit dem Überzug 12 gezeigt. Der stufig abgesetzte Mittelbereich M verhindert in dieser Ausführungsform ein seitliches Abrutschen des Überzugs 12 von der Antriebsrolle 7.

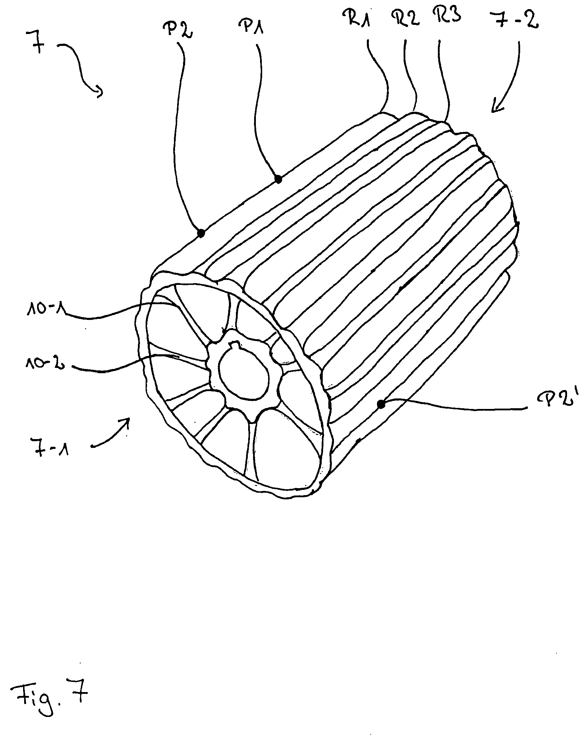

In Fig. 7 ist eine weitere Ausführungsform einer bombierten Antriebsrolle 7 mit gewelltem Profil mit Rippen R1, R2, R3 gezeigt. Zwischen den wellenförmigen Rippen R1, R2, R3 sind entsprechend ebenfalls wellenförmige Täler ausgebildet. Die Antriebsrolle 7 kann beispielsweise in einem Druckgussverfahren hergestellt sein, wobei die Bombierung zu den Stirnseiten 7-1 und 7-2 hin abgeschrägte Mantelfläche bedingt und so ein Lösen aus einer Druckgussform vereinfacht. Weiterhin kann zusätzlich zu dem gewellten, durch die Druckgussform vorgegebenen oder eingepressten Profil die Mantelfläche beispielsweise durch eine Sandstrahlbehandlung zusätzlich aufgeraut bzw. gekörnt sein.

In Bezug auf eine Breite der Antriebsrolle 7 zwischen den Stirnseiten 7-1 und 7-2, die im gezeigten Beispiel mit ca. 115 mm angenommen werden kann, und in Bezug auf einen maximalen Radius bzw. Abstand der Mantelfläche von der Rotationsachse beispielsweise in einem ersten Punkt P1 von ca. 40 mm ist die Außenwölbung der Mantelfläche vergleichsweise gering. Beispielsweise kann der Abstand der Mantelfläche von der Rotationsachse in einem zweiten Punkt P2, welcher zum Punkt P1 axial entlang der Rotationsachse versetzt ist und sich im Seitenbereich befindet, oder in einem alternativen, in entsprechender Lage auf dem gewellten Profil gelegenen zweiten Punkt P2' des Seitenbereichs in einem Bereich von ca. 35 mm bis 38 mm liegen. Schon bei einer derart geringen Bombierung in einem Bereich von 0,5 % bis 10 % des maximalen Abstands kann die Traktion bei der Momentübertragung des Antriebs deutlich verbessert werden.

## Patentansprüche

1. Rangierantrieb (6) für ein Fahrzeug (1), mit
einer durch einen Antriebsmotor um eine Rotationsachse (R) drehend antreibbaren Antriebsrolle (7), welche in einer Antriebsposition an eine Lauffläche eines Reifens (9) des Fahrzeugs (1) anpressbar und in einer Ruheposition von der Lauffläche lösbar ist; wobei
die Antriebsrolle (7) eine mit dem Reifen (9) in Kontakt bringbare Mantelfläche zum Übertragen eines Antriebsmoments des Antriebsmotors auf den Reifen (9) aufweist; und wobei
auf der Mantelfläche ein bezogen auf die Rotationsachse (R) näher zur axialen Mitte hin liegender erster Punkt (P1) vorgesehen ist, der einen größeren Radialabstand zu der Rotationsachse (R) aufweist, als ein axial dazu nach außen, weiter entfernt von der axialen Mitte versetzter zweiter Punkt (P2, P2'), wobei die Mantelfläche einen an eine erste Stirnseite (7-1) der Antriebsrolle (7) angrenzenden ersten Seitenbereich (S1), einen an eine zweite Stirnseite (7-2) der Antriebsrolle (7) angrenzenden zweiten Seitenbereich (S2) und einen zwischen dem ersten Seitenbereich (S1) und dem zweiten Seitenbereich (S2) liegenden Mittelbereich (M) aufweist;
der erste Punkt in dem Mittelbereich (M) gelegen ist; wobei
der zweite Punkt (P2, P2') in dem ersten Seitenbereich (S1) oder in dem zweiten Seitenbereich (S2) angeordnet ist,
wobei der erste Punkt (P1) einen größeren Radialabstand aufweist als alle in dem ersten und/oder dem zweiten Seitenbereich (S1, S2) gelegenen weiteren Punkte (P2, P2') der Mantelfläche,
**dadurch gekennzeichnet, dass**
der Radialabstand der Mantelfläche entlang der Rotationsachse (R) im ersten Seitenbereich (S1) zunächst gering ist, dann zum Mittelbereich (M) hin oder in dem Mittelbereich (M) zunächst ansteigt bis zu einem Maximum des Radialabstandes im Mittelbereich (M) und anschließend in dem Mittelbereich (M) oder im zweiten Seitenbereich (S2) wieder abnimmt,
sodass im mittleren Bereich der Lauffläche der Anpressdruck erhöht wird, wenn die Antriebsrolle (7) mit dem Reifen (9) in Kontakt gebracht ist.

2. Rangierantrieb (6) nach Anspruch 1, wobei die Mantelfläche in dem Mittelbereich (M) eine konvexe Wölbung aufweist.

3. Rangierantrieb (6) nach Anspruch 1 oder 2, wobei der Mittelbereich (M) einen im Wesentlichen senkrecht oder schräg zur Rotationsachse (R) stehenden, geschlossenen Kurvenzug mit maximalem Abstand zur Rotationsachse und mit axial entlang der Rotationsachse (R) oszillierendem Versatz aufweist.

4. Rangierantrieb (6) nach Anspruch 3, wobei der geschlossene Kurvenzug ein Ring ist.

5. Rangierantrieb (6) nach einem der vorstehenden Ansprüche, wobei der Mittelbereich (M) von dem ersten Seitenbereich (S1) und/ oder zweiten Seitenbereich (S2) durch eine Stufe getrennt ist.

6. Rangierantrieb (6) nach einem der vorstehenden Ansprüche, wobei
die Mantelfläche ein Profil mit im Wesentlichen gewellter Struktur mit im Wesentlichen längs zur Rotationsachse verlaufenden Rippen (R1, R2, R3, R1', R2', R3') aufweist.

7. Rangierantrieb (6) nach einem der Ansprüche 1 - 5, wobei
die Mantelfläche ein Profil mit stufig erhöhten Anpressflächen (R1, R2, R3, R1', R2', R3') zum Anpressen an den Reifen (9) aufweist, und wobei
die Anpressflächen (R1, R2, R3, R1', R2', R3') in dem Mittelbereich (M) größer sind als in dem ersten Seitenbereich (S1) und/ oder in dem zweiten Seitenbereich (S2).

8. Rangierantrieb (6) nach einem der Ansprüche 6 und 7, wobei
das Profil (R1, R2, R3) in dem ersten Seitenbereich (S1) zu dem Profil (R1', R2', R3') in dem zweiten Seitenbereich (S2) in Umlaufrichtung um die Rotationsachse (R) versetzt ist.

9. Rangierantrieb (6) nach einem der vorstehenden Ansprüche, wobei
die Antriebsrolle (7) einen über dem Mittelbereich (M) angeordneten Überzug (12) zum Anpressen an den Reifen (9) aufweist.

10. Rangierantrieb (6) nach einem der vorstehenden Ansprüche, wobei
die Mantelfläche durch Innenrippen (10-1, ..., 10-6) mit einem Träger verbunden ist, und wobei
eine der Innenrippen (10-1, ..., 10-6) in dem Mittelbereich (M) breiter ist als in dem ersten Seitenbereich (S1) und/ oder dem zweiten Seitenbereich (S2).

## Claims

1. A maneuvering drive (6) for a vehicle (1), comprising
a drive roller (7) adapted to be rotationally driven about an axis of rotation (R) by a drive motor and adapted to be pressed against a tread of a tire (9) of the vehicle (1) in a drive position and to be released from the tread in a rest position;
the drive roller (7) having a cover surface that can be brought into contact with the tire (9) for transmitting a driving torque of the drive motor to the tire (9); and
the cover surface having a first point (P1) provided thereon which, as related to the axis of rotation (R), is located closer towards the axial center and which has a greater radial distance from the axis of rotation (R) than a second point (P2, P2') which is offset axially outwards relative thereto, further away from the axial center;
the cover surface including a first side portion (S1) adjacent to a first face side (7-1) of the drive roller (7), a second side portion (S2) adjacent to a second face side (7-2) of the drive roller (7), and a central portion (M) located between the first side portion (S1) and the second side portion (S2);
the first point being located in the central portion (M);
the second point (P2, P2') being arranged in the first side portion (S1) or in the second side portion (S2);
the first point (P1) having a greater radial distance than all further points (P2, P2') of the cover surface which are located in the first and/or the second side portion (S1, S2),
**characterized in that**
the radial distance of the cover surface along the axis of rotation (R) is initially small in the first side portion (S1), then at first increases towards the central portion (M) or in the central portion (M) up to a maximum of the radial distance in the central portion (M) and subsequently decreases again in the central portion (M) or in the second side portion (S2),
so that the contact pressure is increased in the middle portion of the tread when the drive roller (7) has been brought into contact with the tire (9).

2. The maneuvering drive (6) according to claim 1, wherein the cover surface has a convex curvature in the central portion (M).

3. The maneuvering drive (6) according to claim 1 or 2, wherein the central portion (M) has a closed curved line that is substantially perpendicular or oblique to the axis of rotation (R), with a maximum distance from the axis of rotation and with an offset oscillating axially along the axis of rotation (R).

4. The maneuvering drive (6) according to claim 3, wherein the closed curved line is a ring.

5. The maneuvering drive (6) according to any of the preceding claims, wherein the central portion (M) is separated from the first side portion (S1) and/or second side portion (S2) by a step.

6. The maneuvering drive (6) according to any of the preceding claims, wherein
the cover surface has a profile with a substantially undulating structure having ribs (R1, R2, R3, R1', R2', R3') extending substantially along the axis of rotation.

7. The maneuvering drive (6) according to any of claims 1 to 5, wherein
the cover surface has a profile with contact pressure surfaces (R1, R2, R3, R1', R2', R3') raised in steps for pressing against the tire (9), and wherein
the contact pressure surfaces (R1, R2, R3, R1', R2', R3') are larger in the central portion (M) than in the first side portion (S1) and/or in the second side portion (S2).

8. The maneuvering drive (6) according to either of claims 6 and 7, wherein
the profile (R1, R2, R3) in the first side portion (S1) is offset in relation to the profile (R1', R2', R3') in the second side portion (S2) in the direction of revolution about the axis of rotation (R).

9. The maneuvering drive (6) according to any of the preceding claims, wherein
the drive roller (7) includes a coating (12) arranged over the central portion (M) for pressing against the tire (9).

10. The maneuvering drive (6) according to any of the preceding claims, wherein
the cover surface is connected to a carrier by internal ribs (10-1, ..., 10-6), and wherein
one of the internal ribs (10-1, ..., 10-6) is wider in the central portion (M) than in the first side portion (S1) and/or the second side portion (S2).

## Revendications

1. Entraînement de manoeuvre (6) pour un véhicule (1), comportant :
un rouleau d'entraînement (7) qui est apte à être entraîné en rotation autour d'un axe de rotation (R) par un moteur d'entraînement et qui peut être appliqué sur une bande de roulement d'un pneu (9) du véhicule (1) dans une position d'entraînement et peut être détaché de la bande de roulement dans une position de repos,
le rouleau d'entraînement (7) présentant une surface enveloppante apte à être amenée en contact avec le pneu (9) pour transmettre un couple d'entraînement du moteur d'entraînement sur le pneu (9), et
un premier point (P1) étant prévu sur la surface enveloppante, lequel se trouve plus près du centre axial par rapport à l'axe de rotation (R) et présente une distance radiale de l'axe de rotation (R) plus grande qu'un deuxième point (P2, P2') décalé axialement vers l'extérieur par rapport à celui-ci et à une plus grande distance du centre axial,
la surface enveloppante présentant une première zone latérale (S1) adjacente à une première face frontale (7-1) du rouleau d'entraînement (7), une deuxième zone latérale (S2) adjacente à une deuxième face frontale (7-2) du rouleau d'entraînement (7), et une zone médiane (M) agencée entre la première zone latérale (S1) et la deuxième zone latérale (S2),
le premier point étant placé dans la zone médiane (M),
le deuxième point (P2, P2') étant agencé dans la première zone latérale (S1) ou dans la deuxième zone latérale (S2),
le premier point (P1) présentant une distance radiale plus grande que tous les autres points (P2, P2') de la surface enveloppante se trouvant dans la première et/ou dans la deuxième zone latérale (S1, S2),
**caractérisé en ce que**
la distance radiale de la surface enveloppante le long de l'axe de rotation (R) dans la première zone latérale (S1) est tout d'abord faible, augmente alors tout d'abord vers la zone médiane (M) ou dans la zone médiane (M) jusqu'à un maximum de la distance radiale dans la zone médiane (M), et diminue ensuite de nouveau dans la zone médiane (M) ou dans la deuxième zone latérale (S2),
de sorte que la pression d'application est augmentée dans la zone médiane de la bande de roulement lorsque le rouleau d'entraînement (7) est amené en contact avec le pneu (9).

2. Entraînement de manoeuvre (6) selon la revendication 1, la surface enveloppante présentant une courbure convexe dans la zone médiane (M).

3. Entraînement de manoeuvre (6) selon la revendication 1 ou 2, la zone médiane (M) présentant un tracé de courbe fermé et sensiblement perpendiculaire ou incliné par rapport à l'axe de rotation (R) avec une distance maximale de l'axe de rotation et un décalage oscillant axialement le long de l'axe de rotation (R).

4. Entraînement de manoeuvre (6) selon la revendication 3, le tracé de courbe fermé étant un anneau.

5. Entraînement de manoeuvre (6) selon l'une des revendications précédentes, la zone médiane (M) étant séparée de la première zone latérale (S1) et/ou de la deuxième zone latérale (S2) par un gradin.

6. Entraînement de manoeuvre (6) selon l'une des revendications précédentes,
la surface enveloppante présentant un profil avec une structure sensiblement ondulée qui présente des nervures (R1, R2, R3, R1', R2', R3') s'étendant sensiblement le long de l'axe de rotation.

7. Entraînement de manoeuvre (6) selon l'une des revendications 1 à 5,
la surface enveloppante présentant un profil avec des surfaces d'application (R1, R2, R3, R1', R2', R3') relevées par gradins pour l'application sur le pneu (9), et
les surfaces d'application (R1, R2, R3, R1', R2', R3') étant plus grandes dans la zone médiane (M) que dans la première zone latérale (S1) et/ou la deuxième zone latérale (S2).

8. Entraînement de manoeuvre (6) selon l'une des revendications 6 et 7,
le profil (R1, R2, R3) dans la première zone latérale (S1) étant décalé par rapport au profil (R1', R2', R3') dans la deuxième zone latérale (S2) dans le sens de révolution autour de l'axe de rotation (R).

9. Entraînement de manoeuvre (6) selon l'une des revendications précédentes,
le rouleau d'entraînement (7) présentant un revêtement (12) agencé au-dessus de la zone médiane (M) pour l'application sur le pneu (9).

10. Entraînement de manoeuvre (6) selon l'une des revendications précédentes,
la surface enveloppante étant reliée à un support par des nervures intérieures (10-1, ... , 10-6), et
l'une des nervures intérieures (10-1, ..., 10-6) étant plus large dans la zone médiane (M) que dans la première zone latérale (S1) et/ou dans la deuxième zone latérale (S2).
